# EUROPEAN PATENT APPLICATION

(11) **EP 4 656 516 A1**
(43) Date of publication of application: **03.12.2025**
(21) Application number: 24178633.4
(22) Date of filing: 28.05.2024
(51) Int. Cl.: B64D 11/00, B64D 11/04

(54) **AIRCRAFT MONUMENT CONFIGURED AS AN AIRCRAFT GALLEY, METHOD OF OPERATING AN AIRCRAFT MONUMENT AND AIRCRAFT**

(71) Applicant: AIRBUS Operations GmbH, 21129 Hamburg (DE)
(72) Inventor: Mortensen Ernits, Rafael, Hamburg (DE); Reiss, Matthias, Hamburg (DE); Vashishtha, Anupama, Hamburg (DE)

(57) **Abstract**

The present invention provides an aircraft monument (100) configured as an aircraft galley (101) having a plurality of compartments for arrangement of at least one galley insert (110), with the aircraft monument (100) being equipped with a control unit (200) comprising a controller (203), configured to receive a plurality of input signals indicative for the operational status of the an aircraft (300), the aircraft galley (101) and the at least one galley insert (110), to analyse the plurality of input signals and to generate a plurality of output signals for controlling operating parameters of the aircraft galley (101) and the at least one galley insert (110), a method of operating an aircraft monument (100) configured as an aircraft galley (101) and an aircraft comprising the aircraft monument (100).

## Description

The present invention pertains to an aircraft monument configured as an aircraft galley, a method of operating an aircraft monument and an aircraft.

Although it can be used in many applications, the present invention and the problems underlying it are explained in greater detail in relation to aircrafts. However, the devices and method described can likewise be used in vehicles in all sectors of the transport industry, e. g. for road vehicles, for rail vehicles or for watercraft or other environments.

In the context of aircraft design and cabin layout, an "aircraft monument" refers to a fixed structural element or feature within the cabin that serves a specific purpose. Monuments are typically non-moveable and are integrated into the aircraft's interior design to optimize space utilization and functionality. Examples of aircraft monuments include lavatories, galleys, crew rest areas, closets, and other built-in fixtures. They are strategically positioned within the cabin to provide essential services while maintaining passenger comfort and safety.

An aircraft galley serves as the kitchen and food preparation area on an aircraft. Its primary function is to store, prepare, and serve food and beverages to passengers and crew during flights. The galley configuration varies depending on the type and size of the aircraft, but typically includes storage compartments for food, beverage carts, ovens, coffeemakers, refrigerators, and sinks.

The galley is for example located towards the front and/or rear of the aircraft, with easy access for flight attendants to serve passengers in both the cabin and cockpit. Galley configuration must also consider factors such as weight distribution, ease of movement for crew members for a more ergonomic operation, and accessibility.

The connectivity of an aircraft galley within the aircraft architecture involves its integration with various systems and components to ensure smooth operation and functionality during flight. This connectivity encompasses both physical and functional aspects, wherein the galley is for example physically connected to the aircraft structure. It may also be linked to the aircraft's electrical, plumbing, and ventilation systems to support its appliances and functions. Furthermore, the galley can for example be connected to the aircraft's electrical system to power appliances such as ovens, refrigerators, coffee makers, and lighting. Electrical wiring runs for example through the cabin structure to supply power to the galley and ensures seamless operation. The galley usually also requires plumbing connections for water supply and drainage. Sinks, coffee makers, and other appliances in the galley rely on water supply lines and drainage systems integrated into the aircraft's architecture. Some galleys may also require a cooling department for properly conserving food, in particular in the compartment that receives and houses food and beverage trolleys. Adequate ventilation and exhaustion can be crucial in the galley to maintain air quality and regulate temperature. The galley can for example be connected to the aircraft's ventilation system, which circulates fresh air and to the aircraft's exhaustion that removes odours, smoke, and fumes generated during food preparation. Communication systems may also be integrated into the galley for crew members to communicate with the cockpit and other areas of the aircraft. This ensures effective coordination and communication during flight operations.

In standard galleys, galley electrical inserts (e.g. oven, coffeemaker, fan, refrigerator etc.) and active units (e.g. air chiller and chillers for cooled trolley compartments) have their own control and power units and an electrical panel, that serves in particular for wiring protection but also for including switching facilities (e.g. of the chiller) is integrated in the galley. The electrical protection (e.g. overload protection) of the galley inserts (e.g. oven, coffeemaker etc.) is usually directly integrated in the equipment itself (e.g. fuse). The integration of the elements such as control and power units and electric protection in each insert increases weight and reduces space available. Furthermore, integration in an overarching aircraft architecture and scaling as well adaptation of the aircraft galley is difficult to achieve and requires additional efforts. Also different possible galley configurations, generate a great number of galley layout variants, implying possibly different electrical architectures (including electrical wiring and electrical panel), thus requiring efforts for configuration management and individual design of the galleys.

Against this background, it is an object of the present invention to find an aircraft monument configured as an aircraft galley which allows for reducing the number of individual parts and weight of the aircraft monument and reducing complexity and efforts in integration and operation of the aircraft monument into an aircraft architecture.

This object is achieved by an aircraft monument having the features of claim 1, a method of operating an aircraft monument configured as an aircraft galley having the features of claim 11, and an aircraft comprising an aircraft monument configured as an aircraft galley having the features of claim 14.

According to a first aspect of the invention, an aircraft monument is provided that is configured as an aircraft galley and has a plurality of compartments for arrangement of at least one galley insert. The aircraft monument is equipped with a control unit comprising a controller. The controller is configured to receive a plurality of input signals indicative for the operational status of an aircraft, the aircraft galley and the at least one galley insert, to analyse the plurality of input signals and to generate a plurality of output signals for controlling operating parameters of the aircraft galley and the at least one galley insert. This has the advantage that the effort for integration of control technology into the aircraft galley is significantly reduced and a smart and adaptive system can be provided. In particular operation in real-time is enabled. By equipping the aircraft galley with a control unit and a controller capable of processing input signals from various sources, such as the aircraft's operational systems, the galley itself, and its inserts (equipment and components), enhances efficiency since the controller allows for analysing multiple input signals and hence for real-time monitoring of the operational status of the aircraft, the galley, and its inserts. This enables the optimization of operating parameters, such as temperature control, power usage, and resource allocation, leading to increased efficiency in galley operations, in particular in realtime. Furthermore, with the ability to receive and analyse input signals indicative of the aircraft's operational status, the controller can detect potential issues or anomalies in the galley environment promptly. It can then generate, in particular in real-time, output signals to adjust operating parameters or trigger alerts to crew members, thereby enhancing safety measures onboard. The controller capability to generate output signals for controlling operating parameters provides flexibility in adapting the galley's functionality to different flight scenarios, passenger preferences, and operational requirements. This allows for customization of services and efficient utilization of resources based on specific flight conditions or passenger demands by using one integrated control unit. By continuously monitoring the operational status of the galley and its inserts, the controller can also facilitate predictive maintenance by identifying potential equipment failures or performance degradation early on. This approach to maintenance can help prevent costly downtimes and ensure the reliability of the galley system. Optionally, the controller can be provided with a computing and evaluating unit that uses machine learning algorithms that are able to learn from the recorded input and related out signals to further optimise the control of operation parameters over time.

All communication means, interfaces and methods described in connection with the present invention are configured to enable use of standardised protocols such as ARINC 812 to ensure compatibility in different aircraft systems or to implement further communication options such as Bluetooth or WiFi for dedicated galley features or particular devices.

A further aspect of the invention lies in a method of operating an aircraft monument configured as an aircraft galley. The method comprises the steps of receiving a plurality of input signals indicative for the operational status of an aircraft, the aircraft galley and the at least one galley insert by the controller, analysing the plurality of input signals by the controller, generating a plurality of output signals by the controller, controlling the operating parameters of the aircraft galley and the at least one galley insert based on the plurality of output signals. This has the advantage that in implementing the method for operating an aircraft galley, the galley is highly responsive and adaptive to the dynamic conditions onboard the aircraft by using one single integrated control unit.

By for example receiving and analysing input signals indicative of the operational status of the aircraft, the galley, and its inserts, the method allows for precise monitoring of resource utilization such as power, water, exhaustion, ventilation, cooling and food supplies. This enables the controller to optimize resource allocation based on real-time requirements, minimizing waste, reducing energy consumption and maximizing efficiency as well as and allowing for downsizing aircraft systems (e.g., through lower electrical power demand, leading to feeder reduction or downsizing of aircraft electrical generator). The method also allows for analysing a variety of input signals, including those related to the aircraft's operational status. This allows for the adaptation of galley operations in response to changing flight conditions such as turbulence, altitude, or temperature variations. By dynamically adjusting operating parameters, the galley can maintain optimal performance and passenger satisfaction throughout the flight. In a further aspect the method also enables the generation of output signals to control operating parameters in the galley's service provision. For example, by automatically adjusting meal preparation times, optimizing temperature settings for food storage, or managing cabin lighting, the method contributes to an enhanced onboard experience for passengers. The invention method for example also facilitates proactive maintenance by continuously monitoring the operational status of the galley and its inserts. By analysing input signals related to equipment performance, the controller can identify potential issues or failures early on and generate output signals for corrective actions over the entire galley system. This proactive approach helps prevent disruptions to galley operations and ensures the reliability of onboard services.

A further aspect of the invention lies in an aircraft comprising an aircraft monument according to the invention and configured as an aircraft galley. This has the advantage that integration and scaling of the aircraft galley is facilitated, efficiency of using space available in the aircraft is improved and overall weight reduction is achieved.

Advantageous embodiments and further developments are apparent from the further dependent claims and from the description with reference to the figures.

According to an embodiment of the invention, the at least one galley insert is configured as one of an electrical galley insert, an active galley inserts and an interchangeable galley insert. This has the advantage that the galley can be used with a plurality of different galley inserts while effort for the integration of the functionalities of the galley inserts and customization is significantly reduced due to the configuration of by the invention aircraft monument.

In connection with the present invention the term "galley insert" has to be understood in the broadest sense with the term encompassing galley inserts such as electrical galley inserts, active galley inserts, active galley units (e.g. chillers) and interchangeable galley insert (e.g. trolleys in various configurations) as arranged or installed in the galley or aircraft monument compartments.

According to an embodiment of the invention, the control unit further comprises a central power supply module for supplying and distributing power to the aircraft galley and the at least one galley insert, wherein the controller is configured to control the power supply module. This has the advantage that the galley is provided with a single power supply module providing and distributing power to all galley inserts and appliances. The power supply and distribution is controlled via the controller thus eliminating the need to provide a power supply and related protection means in each insert. This allows for customization of the aircraft monument and galley with reduced efforts and provides the option for scaling the monument and galley configuration to various use cases and aircraft architectures with at the same time reducing efforts in customization. A further advantage lies in the centralization and control of power distribution within the aircraft galley system. By for example integrating a central power supply module into the control unit of the aircraft galley, power distribution becomes more efficient and centralized. The controller's ability to control the power supply module allows for dynamic allocation of power based on real-time demands. This ensures that power is allocated precisely where and when it is needed most, optimizing energy usage and reducing waste. Centralized control of the power supply module enables better monitoring and management of electrical systems within the galley. The controller can detect and respond to potential power-related issues promptly, such as overloads or voltage fluctuations, ensuring the safety and reliability of the galley's electrical infrastructure. Furthermore, with the controller managing the power supply module, galley operations become more streamlined and easier to manage for the crew. They can rely on a centralized interface to monitor and adjust power settings as needed, simplifying the operation of various galley appliances and equipment. In the event of power-related faults or failures, the centralized control provided to the power supply module facilitates quicker fault isolation and troubleshooting. The controller can pinpoint the source of the issue and take corrective actions efficiently, minimizing downtime and disruptions to galley operations. The controller's ability to control the power supply module for example also allows for dynamic adjustments in power distribution based on changing flight conditions or operational requirements. As an example, during periods of high demand, such as meal service, the controller can prioritize power allocation to critical galley appliances, ensuring efficient operation.

According to a further embodiment of the invention the control unit further comprises a wiring and equipment protection module equipped with at least one of a thermal circuit breaker, a local solid state power controller and a remoted solid state power controller and wherein the controller is configured to control the wiring and equipment protection module. This has the advantage that integration of the wiring and equipment protection module allows for accommodation of the monument and galley to different monument or aircraft architectures in an easy and efficient manner, thereby reducing manufacturing efforts and space requirements. Furthermore, the control of the wiring and equipment protection module by the controller allows for enhancing safety and reliability of the aircraft galley system. The inclusion of a wiring and equipment protection module equipped with features such as thermal circuit breakers and solid-state power controllers can for example provide a layer of safety to the galley's electrical system. These components help preventing electrical overloads, short circuits, and other potential hazards by automatically interrupting power flow when abnormal conditions are detected in one or more galley inserts. The wiring and equipment protection module also safeguards the galley's wiring and electrical equipment from damage caused by electrical faults or failures. By controlling this centralized module, the controller can monitor the integrity of the electrical system and respond promptly to protect sensitive components from harm. The controller's ability to control the wiring and equipment protection module enables for example proactive fault detection and isolation within the galley's electrical system. If an abnormal condition arises, such as a short circuit or excessive current draw, the controller can trigger the appropriate protective measures to isolate the fault and prevent it from spreading to other components. In the event of a fault or electrical failure, the protective measures implemented by the wiring and equipment protection module for example help to minimize downtime and disruptions to galley or galley insert operation. The integration of advanced protection features into the control unit helps to ensure compliance with stringent safety regulations governing aircraft equipment. By providing robust protection against electrical hazards, the galley system can meet or exceed industry standards for safety and reliability.

According to a further embodiment of the invention, the control unit further comprises a wiring distribution module configured to provide a connection of the aircraft monument to an aircraft wiring system. This has the advantage that wiring distribution integrated in the control unit can arrange the segregation route needs arriving from the aircraft architecture and reduces efforts in customization by a centralized approach.

According to a further embodiment of the invention, a plurality of detection means for one of identifying the at least one galley insert and detecting the operational status of the at least one galley insert is provided, with the detection means being configured as one of a sensor, in particular a temperature sensor and a camera each generating an input signal to be received by the controller. This has the advantage that the use of various detection means, including sensors and cameras, allows for comprehensive monitoring of the galley inserts and insert's status by the central control unit. This enables the detection of anomalies, such as overheating or physical damage, in real-time. For example, temperature sensors can promptly detect overheating, reducing the risk of fire and ensuring the safety of both the crew and passengers. This approach to safety helps in preventing hazardous situations. Sensors and cameras can for example also provide precise identification and status information for each galley insert. This accuracy ensures that the correct operational parameters are maintained and any issues are quickly identified and addressed. Continuous input signals from the detection means to the controller allow for real-time data collection and analysis. This enables for example timely interventions and adjustments to the operating parameters of the galley inserts. By analysing data from temperature sensors and cameras, the control unit can predict potential failures before they occur. This predictive maintenance approach reduces unexpected downtimes and extends the lifespan of the galley inserts. The detection means facilitate efficient operation by ensuring that each galley insert is functioning within its optimal parameters. This leads to better energy management and overall efficiency of the galley systems. With accurate and reliable status information, the crew can manage the galley inserts more effectively, enhancing the service quality provided to passengers. The collected data also provides insights into the performance and usage patterns of the galley inserts. This information can be used to make informed decisions regarding maintenance schedules, upgrades, and operational procedures. The integration of multiple detection means allows for a more seamless and cohesive monitoring system. This integration ensures that all relevant data points are considered in the system's operational management. Furthermore, automated monitoring reduces the need for manual inspections, freeing up crew time for other tasks and minimizes the possibility of human error in detecting issues. Incremental automation through the aforementioned assistance system for example also allow reducing cabin crew effort, enhancing ergonomics and improving process time, e.g., galley and trolley commissioning set-up support and inventory management.

According to a further embodiment of the invention, the controller is configured to receive and analyse input signals from at least one further input source, wherein the at least one further input source is one of a thermal management module, a system dynamic management, being in particular at least one of a dynamic CAX (e.g. exhaustion) monitoring and control, an inter-ATA water consumption and control and an automated maintenance, and an operations support, being in particular at least one of a galley and trolley commissioning set-up support and an inventory management. This has the advantage that the ability to receive and analyse input signals from a variety of sources allows for seamless integration of multiple systems within the control unit. This approach ensures that the galley system operates in alignment with other aircraft systems, enhancing overall efficiency and performance. For example, by integrating with thermal management and system dynamic management, the controller can optimize the operating conditions of the galley inserts based on real-time thermal data and dynamic system status and allows for efficient heat recovery throughout the galley and galley inserts. This leads to improved energy efficiency and better resource management. Automated maintenance inputs for example enable the system to predict and schedule maintenance activities including disinfection of the galley and galley inserts before issues arise, reducing downtime and improving the reliability of the galley system. This approach minimizes unexpected failures, extends the lifespan of the equipment and facilitates compliance in connection with hygienic requirement. Inter-ATA water consumption and control input for example allow for precise management of water resources within the galley. This ensures that water is used efficiently, reducing waste and supporting sustainable operations. Dynamic CAX (e.g. exhaustion) monitoring and control provide real-time data on various operational parameters, and for example allows the controller to make adjustments on-the-fly.. For example, adjusting the exhaustion supply according to the oven operation phase allows for a possible downscaling of aircraft exhaustion system through controlled demand. This adaptability enhances the responsiveness of the system to changing conditions and demands. Inputs from inventory management for example ensure that the galley is always stocked with the necessary items, reducing the risk of shortages and enhancing the service quality provided to passengers. This streamlined inventory control supports efficient galley operations. Operations support, including galley and trolley commissioning set-up support, helps for example in organizing and managing the galley setup more effectively. This support improves pre-flight preparations, for example by ensuring that the galleys and/or service units such as trolleys are ready for service, during flight handling, for example by improving trolley commissioning, and post-flight, for example by controlling and monitoring galley and/or trolley unloading and inventory control. The controller's ability to analyse diverse input signals further supports for data-driven decision-making in the control unit. This leads to more informed and effective management of the galley system, enhancing overall operational performance. By integrating thermal management and dynamic system monitoring, the system can pre-emptively address potential safety issues related to overheating or system stress, thereby enhancing the safety of the galley operations. Inputs from various sources allow for the optimization of resources such as energy, water, and inventory by the control unit. This not only reduces operational costs but also supports sustainable practices within the aircraft's operations.

According to a further embodiment of the invention, the control unit further comprises a user interface module for at least one of receiving a user-generated input signal and displaying system parameters, with the user interface module being configured as at least one of a user interface fixedly installed in the aircraft monument, a mobile aircraft crew device and a flight attendant panel. This has the advantage that usability and accessibility of the aircraft monument and in particular the galley is enhanced since the user interface module that can be accessed via various devices, including a fixed interface, mobile devices, and flight attendant panels, provides flexibility and ease of access for the crew. This allows for quick adjustments and monitoring from different locations within the aircraft. Furthermore, operational control over the galley system can be improved by allowing the crew to input commands and receive real-time feedback from the controller also considering a plurality of other input signals, via the user interface module. This real-time interaction ensures that any necessary changes can be made promptly, optimizing the performance and functionality of the galley inserts supported by the controller considering further parameters and align the operation of the galley in accordance with input signals from other sources. A well-designed user interface for example also simplifies the interaction between the crew and the control unit. This user-friendliness reduces the likelihood of errors and ensures that even less experienced crew members can operate the system effectively in cooperation with the incremental automation through assistance systems implemented in the control unit, also allowing for faster and more efficient galley operation and relief of cabin crew tasks (e.g. by adapted galley status or self-adjusted functions). Displaying system parameters through the user interface contributes to enabling the crew to monitor the status of various components, such as the thermal management module, system dynamic management, and other integrated systems. Real-time visibility into these parameters allows for immediate adjustments and proactive management. Quick access to critical system information and the ability to make immediate changes also contributes to the safety and efficiency of the galley operations. For example, if a temperature sensor indicates overheating, the crew can quickly intervene to prevent potential hazards. The user interface can for example also display maintenance alerts and diagnostics data from the automated maintenance system. This helps the crew to take timely action, ensuring that maintenance is performed before issues become critical, thereby reducing downtime and improving system reliability. Through the user interface, the crew can also manage resources such as water and inventory more effectively. Input signals from inter-ATA water consumption and control and inventory management can be monitored and managed to ensure optimal usage and availability. For example, the ability to use mobile devices and flight attendant panels allows for a customizable and flexible approach to managing the galley system. The crew can tailor their interaction with the system based on their specific needs and preferences while being supported by the automation achieved by the implementation of automated assistance systems. The interface can for example also support operations such as galley and trolley commissioning set-up and dynamic CAX monitoring and control, making it easier for the crew to prepare the galley for service and manage ongoing operations efficiently. The user interface facilitates communication and coordination among the crew. By providing a centralized platform for monitoring and control, it ensures that all team members are informed and can work together more effectively from a plurality of locations in the aircraft.

According to a further embodiment of the invention, a housing is provided with at least the controller, the central power supply module, the wiring and equipment protection module, the wiring distribution module and the user interface module being arranged in the housing. This has the advantage that the space requirements are reduced, accessibility of the mentioned systems is increased and scaling of the systems is facilitated. At the same time manufacturing and maintenance efforts are reduced.

According to a further embodiment of the invention, the controller comprises a communication module for communicating with at least one of elements of the control unit and the aircraft, the communication module being configured to operate in a plurality of communication protocols, in particular a CANBus, ethernet or wireless protocol. This has the advantage that seamless integration with various elements of the aircraft is enabled, allowing the galley control unit to interact and coordinate with other aircraft systems. This integration enhances the overall functionality and efficiency of the aircraft's operations. The ability to operate in multiple communication protocols such as CANBus, ethernet, and wireless protocols ensures that the control unit can interface with a wide range of devices and systems, also opens the possibility for connecting further devices beyond the galley (e.g., through bluetooth) or inside the galley (e.g., chiller). This versatility supports diverse aircraft configurations and future-proofs the system against technological advancements. The communication module facilitates real-time data exchange between the controller and other systems, ensuring timely updates and synchronization. This capability is crucial for dynamic monitoring and control, as well as for proactive maintenance and operational adjustments. For example, by communicating with the thermal management module, system dynamic management, and other integrated systems, the controller can receive detailed diagnostic information. This enhances the system's ability to monitor performance, identify issues early, and take corrective actions promptly. As a further example the ability to receive and transmit data in real-time allows the controller to make informed decisions quickly. For example, if a temperature sensor detects an overheating issue, the controller can immediately communicate with the thermal management module to address the problem, thereby enhancing operational safety. The communication module in some embodiments also supports the integration of various user interfaces, including fixed installations, mobile devices and flight attendant panels. This flexibility ensures that the crew can interact with the galley control system from multiple points, improving usability and accessibility. By communicating for example with the inter-ATA water consumption and control and inventory management systems, the controller can ensure optimal resource allocation and usage. This integration supports efficient management of water and inventory, reducing waste and improving service quality. The communication capabilities for example also enable better coordination between different systems and modules, such as the automated maintenance system and operations support. This coordination streamlines workflows, reduces redundancy, and enhances overall operational efficiency. The use of multiple communication protocols allows the system to be easily scaled and customized to meet the specific needs of different aircraft models and configurations. This scalability ensures that the system can adapt to varying operational requirements and technological developments. The use of standardized communication protocols such as CANBus, ethernet, and wireless reduces the complexity of installation and maintenance. It allows for easier integration of new components and systems, minimizing downtime and associated costs. Any communication described in connection with the present invention is configured to enable use of standardised protocols such as ARINC 812 to ensure compatibility in different aircraft systems.

According to a further embodiment of the invention method, the step of controlling the operating parameters of the aircraft galley and the at least one galley insert further comprises adapting the operating parameters of the aircraft galley and the at least one galley insert depending on flight phase or passenger service phase. This has the advantage that operational efficiency is increased. For example, adapting the operating parameters based on flight phases or passenger service phases ensures that resources such as power and water are used efficiently. With that power-intensive operations can be minimized during take-off and landing, when energy demands are higher for critical flight systems. During critical flight phases like take-off, landing, and turbulence, adapting the operating parameters can also enhance safety by reducing the operational load on galley equipment, thereby minimizing the risk of malfunctions or hazards. By adjusting the galley operations according to passenger service phases, such as mealtimes and rest periods, the crew can provide a better service experience. For example, heating meals during meal service and reducing noise levels during rest periods enhances passenger comfort. Dynamic adjustment of galley operations helps in optimizing the workflow and resource allocation. During low-demand periods, the system can scale down operations, saving energy and reducing wear and tear on equipment. Continuous monitoring and adaptation of operating parameters can help in identifying potential issues early. For instance, if a galley insert shows signs of malfunction during a high-demand phase, it can be flagged for maintenance, thereby preventing unexpected failures. By tailoring the galley's operational intensity to match the flight phase, the aircraft can achieve better energy savings. For example, reducing the use of high-energy appliances during cruise can lead to significant energy savings over time. Adjusting the operating parameters based on flight phases can help in managing the thermal load and support heat recovery within the galley. This is particularly important during long flights where thermal buildup can affect both equipment performance and comfort levels in the cabin. Some flight phases might have specific regulatory requirements regarding the operation of onboard equipment. Adapting the galley operations accordingly ensures compliance with aviation regulations and safety standards. The ability to dynamically adjust operations provides greater flexibility in managing unforeseen circumstances, such as changes in flight schedule or passenger needs. This flexibility enhances the overall resilience of the galley system. By optimizing the operating parameters based on the phase of flight or service, also the wear and tear on galley equipment can be minimized. This extends the lifespan of the equipment and reduces maintenance costs.

According to a further embodiment of the invention method, the central power supply module supplies power individually to the aircraft galley and the at least one galley insert based on an output signal received from the controller. This has the advantage that by supplying power individually to the galley and its inserts based on specific needs, the system ensures that energy is used only when necessary. This targeted power distribution reduces overall energy consumption and leads to more efficient operation. The controller can also dynamically adjust power allocation to different galley inserts depending on their operational status and demand by accordingly controlling the power supply module. This ensures that each component operates at its optimal performance level, improving the efficiency and effectiveness of galley operations. Supplying power individually via the central power supply module allows for better thermal management and reduced wear and tear on galley components. By preventing unnecessary power usage, the components are less likely to overheat or degrade quickly, enhancing their reliability and extending their lifespan. Individual power control reduces the risk of overloading the electrical system. The controller can monitor and manage power distribution in the entire galley to ensure that no single component draws excessive power, thereby mitigating potential electrical hazards and enhancing overall safety. The ability to control power supply on an individual basis but via a centralized module allows for greater flexibility in managing different operational scenarios. For example, during peak service times, the system can prioritize power to essential inserts, while during low-demand periods, it can scale down power usage. By centrally monitoring the power requirements and status of each insert, the controller can detect anomalies early and take corrective action. This proactive approach to fault management helps in identifying and addressing issues before they escalate into major problems. The capability to supply power individually supports the integration of advanced features and functionalities in the galley. For example, smart appliances that adjust their power consumption based on real-time data can be more effectively utilized, enhancing the overall functionality of the galley. Targeted power management helps in minimizing the stress on electrical components, leading to fewer breakdowns and reduced maintenance requirements. This can result in significant cost savings over time. The system can allocate power via the centralized power supply module based on real-time needs and priorities, ensuring that critical functions are always operational while conserving energy on less critical functions. This efficient resource allocation supports optimal galley operation. The method allows for easy scalability and adaptability to different aircraft configurations and galley setups. As new inserts or components are added, the controller can seamlessly integrate them into the power management system without requiring major modifications or integration of a plurality of independent power supplies in the respective new inserts and or components.

According to a further embodiment of the invention aircraft, two or more aircraft monuments are provided, with the aircraft monuments being in communicative connection with each other. This has the advantage that when multiple aircraft monuments are communicatively connected, they can coordinate their operations, leading to improved efficiency. For example, if one galley is preparing a large number of meals, it can communicate with other monuments to distribute the workload more evenly. Having multiple interconnected monuments can also provide redundancy. If one monument experiences a failure, others can take over its functions, ensuring continuous operation and enhancing the overall reliability of the system. Connected monuments can also share information about inventory levels, resource usage, and operational status. This allows for better management of resources such as food, water, and power, ensuring that no single monument runs out of critical supplies while others have excess. Communication between monuments can also enable better coordination of passenger services. For example, if a passenger requests a special meal that is not available in one galley, another galley can be alerted to prepare and deliver it. Interconnected monuments can also share diagnostic data and maintenance alerts. This enables a centralized system to monitor the status of all monuments, schedule maintenance more efficiently, and quickly address any issues that arise. The ability to communicate and coordinate allows for more flexible operations. For instance, during different phases of flight or varying service demands, the system can dynamically allocate tasks between monuments to optimize performance and service. In case of an emergency, communicative connections between monuments allow for quick dissemination of critical information. This ensures that all parts of the galley system can respond appropriately, enhancing overall safety. The system is easily scalable. As more monuments are added to an aircraft, they can be integrated into the existing communicative network, maintaining seamless operation without significant reconfiguration. Sharing resources and coordinating operations can lead to cost savings. For example, if one monument has excess inventory that another needs, transferring items between them can reduce waste and avoid unnecessary restocking expenses.

The invention will be explained in greater detail with reference to exemplary embodiments depicted in the drawings as appended.
- Fig. 1: schematically depicts an aircraft monument configured as an aircraft galley according to an embodiment of the invention;
- Fig. 2: schematically depicts a control unit and a related communication setup of the control unit of an aircraft monument configured as an aircraft galley according to an embodiment of the invention,
- Fig. 3: schematically depict a flowchart of a method of operating an aircraft monument configured as an aircraft galley according to an embodiment of the invention; and
- Fig. 4: schematically depicts an aircraft according to an embodiment of the invention.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the detailed description. The elements of the drawings are not necessarily to scale relative to each other. In the figures, like reference numerals denote like or functionally like components, unless indicated otherwise.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

In the figures of the drawings, identical elements, features, and components that have the same function, and the same effect are each given the same reference signs, unless otherwise specified.

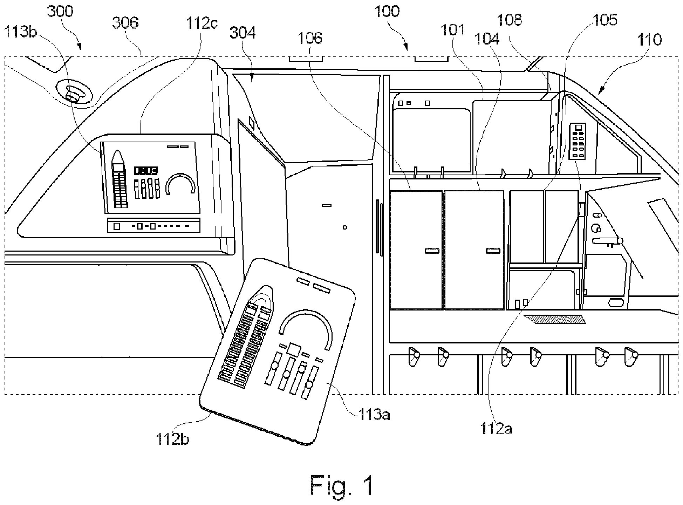

Fig. 1 schematically depicts an aircraft monument 100 configured as an aircraft galley 101 according to an embodiment of the invention. The aircraft galley 101 serves as the kitchen and food preparation area on an aircraft 300 and comprises a plurality of electrical galley inserts 110. The configuration of the aircraft galley 101 varies depending on the type and size of the aircraft 300, but typically includes galley inserts 110 configured as storage compartments for food, beverage carts, and sinks as well as electrical galley inserts such as ovens 104, coffeemakers 105, refrigerators 106. The aircraft galley 101 is for example located towards the front 301 or rear 302 of the aircraft 300, with easy access for flight attendants to serve passengers in both the cabin 304 and cockpit 305. The option of including one or more similar aircraft galley 101 in the aircraft 300, for example in the front 301 and rear 302 of the cabin 304 is also encompassed.

The connectivity of an aircraft galley 101 within the aircraft 300 architecture involves its integration with various systems and components to ensure smooth operation and functionality during flight. This connectivity encompasses both physical and functional aspects, wherein the aircraft galley 101 is physically connected to the aircraft structure 306, typically located near the front 301 or rear 302 of the cabin 304 for accessibility. However, the option of including one or more similar aircraft galley 101 in the aircraft 300, for example in the front 301 and rear 302 of the cabin 304, is also encompassed. The aircraft galley 101 is also linked to the aircraft's 300 electrical, plumbing, and ventilation/exhaustion systems to support its appliances and functions. Furthermore, the aircraft galley 101 is connected to the aircraft's electrical system to power electrical galley inserts 110 such as ovens 104, refrigerators 106, coffee makers 105, and lighting 108. Electrical wiring runs through the cabin 304 structure to supply power to the aircraft galley 101 via a centralized power supply module 207 and ensure seamless operation. The aircraft galley 101 also comprises plumbing connections for water supply and drainage. Sinks, coffee makers 105, and other appliances in the aircraft galley 101 rely on water supply lines and drainage systems integrated into the aircraft's 300 architecture. Adequate ventilation in the aircraft galley 101 maintains air quality and regulates temperature. The aircraft galley 101 is connected to the aircraft's 300 ventilation system, which circulates fresh air and to the exhaustion system which removes odours, smoke, and fumes generated during food preparation. Communication systems are also integrated into the aircraft galley 101 for crew members to communicate with the cockpit 305 and other areas of the aircraft 300. This ensures effective coordination and communication during flight operations. In the aircraft galley 101, galley electrical inserts 110 (e.g. oven 104, coffeemaker 105, fan, refrigerator 106 etc.) and further active units (e. g. air chiller) are connected to a central power supply module 207 controlled via the controller 203 provided in the control unit 200. The central power supply module 207 and electrical protection (e.g. overload protection) of the electrical galley inserts 110 is integrated in the control unit 200 of the aircraft galley 101. Three user interface devices 112a, b, c for receiving user-generated input signals and for displaying system parameters are provided in the aircraft galley 101 or adjacent thereto. The first user interface device 112a is configured fixedly installed in the aircraft monument 100 and configured as an electrical panel, whereas the second user interface device 112b is configured as a mobile aircraft crew device and the third user interface device 112c as a flight attendant panel. The user interface devices 112a, b, c are configured to communicate with the control unit 200 via a communication modul 220 provided therein. The user interface devices 112b, c configured as a mobile aircraft crew device and flight attendant panel comprise touch screens 113a, b and allow operational control by the crew by inputting commands and receive real-time feedback via the user interface devices 112b, c. System parameters are displayed on the user interface devices 112a, b, c thus enabling the crew to monitor the status of various components, such as the thermal management module 208, system dynamic management module 209, and other integrated systems. Real-time visibility into these parameters allows for immediate adjustments and proactive management. Quick access to critical system information and the ability to make immediate changes also contributes to the safety and efficiency of the aircraft galley 101 operations.

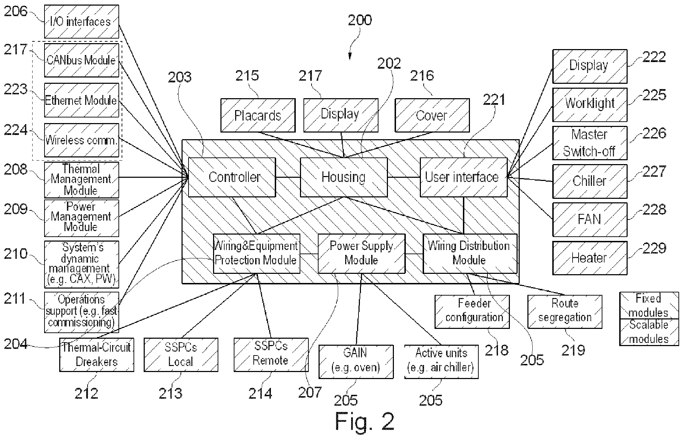

Fig. 2 schematically depicts the elements of a control unit 200 and a related communication setup of the elements in the control unit 200 of an aircraft monument 100 configured as an aircraft galley 101, according to an embodiment of the invention. The control unit 200 comprises a number of fixedly installed modules as well as a number of scalable modules described in more detail below. Most of the fixed modules are combined in a housing 202 holding the controller 203, the wiring and equipment protection module 204 and the wiring distribution module 205. The housing 202 further comprises the scalable elements such as the user interface module 221 and the central power supply module 207. The fixed modules are in communication with a plurality of scalable modules supporting operation of the aircraft galley 101. The control unit 200 is integrated in the aircraft monument 100 and controls the operation parameters of the aircraft galley 101. The control unit 200 comprises the controller 203 that is configured to receive a plurality of input signals indicative for the operational status of an aircraft 300, the aircraft galley 101 and the (electrical) galley inserts 110. The controller 203 is configured as a logical controller 203 and analyses the plurality of input signals to automatically generate a plurality of output signals for controlling operating parameters of the aircraft galley 101, the galley inserts 110 and the other elements of the control unit 200 to support automated operation of the aircraft galley 101. This enables the optimization of operating parameters, such as temperature control, power usage, and resource allocation, leading to increased efficiency in galley operation. The integration of the functionalities as a central but modular solution, allows for weight savings (e.g., reduction of parts) and more space (e.g., by eliminating an individual power supply and controller for each electrical galley insert 110). Also features such as integrated thermal management with energy reuse from cold/hot areas and support of galley commissioning (e.g., trolley setup) can be integrated in an efficient way. Besides the control unit 200 enables the multi-galley operation and monitoring of further equipment outside the galley (e.g. of a cabin mobile device or flight attendant panel - FAP), using already available displays or user interfaces 112a, b, c in the cabin 304. The modular approach as schematically displayed in Fig. 2 reduces customization effort, as the fixed modules do not change the design of the control unit 200. The scalable modules, nevertheless, allow customization depending for example on the aircraft 300 architecture and type as well as customer requirements.

The controller 203 is provided with a scalable I/O interface 206 for receiving signals from the modules and appliances as well as integrated sensors or cameras and to output control signals to the fixed and scalable modules. For communicating between the elements of the control unit 200 and the aircraft 300, the controller 203 is connected with several scalable communication modules such as a CANbus module 217 and ethernet module 223 and a wireless communication module 224 being configured to operate in a plurality of communication protocols, in particular a CANBus, ethernet or wireless protocol. This allows seamless integration with various elements of the aircraft 300, allowing the control unit 200 to select the appropriate communication protocol to interact and coordinate with other aircraft systems. This integration enhances the overall functionality and efficiency of the aircraft's operations. The ability to operate in multiple communication protocols such as CANBus, ethernet, and wireless protocols ensures that the control unit 200 can interface with a wide range of devices and systems. This versatility supports diverse aircraft configurations and future-proofs the system against technological advancements. The communication modules facilitate real-time data exchange between the controller 203 and other systems, ensuring timely updates and synchronization. This capability is crucial for dynamic monitoring and control, as well as for proactive maintenance and operational adjustments. The controller 203 is further configured to receive input signals from a thermal management module 208, a power management module 209, a systems dynamic management module 210 and an operation support 211 and configured to receive input signals from the modules as well as to output control signals to the modules to monitor and adapt operation parameters of the modules implementing those in the control of the aircraft galley 101.

The control unit 200 further comprises a wiring and equipment protection module 204 connected with at least one of a thermal circuit breaker 212, a local solid state power controller (SSPC) 213 and a remoted solid state power controller (SSPC) 214. In some embodiments it is possible that the solid state power controllers (SSPC) 213, 214 could substitute the thermal circuit breakers such that the configuration could be to implement e.g. for example three local solid state power controller (SSPC) 213 and one thermal circuit breaker 212 or to use a total of four solid state power controller (SSPC) 214, without limiting the invention thereto. The controller 203 is configured to control the wiring and equipment protection module 204. The integration of the wiring and equipment protection module 204 in the control unit 200 allows for accommodation of the aircraft monument 100 and the aircraft galley 101 to different monuments or aircraft architectures in an easy and efficient manner thereby reducing manufacturing efforts and space requirements. Furthermore, the control of the wiring and equipment protection module 204 by the controller 203 allows for enhancing safety and reliability of the aircraft galley 101. The inclusion of a wiring and equipment protection module 204 equipped with at least one of a thermal circuit breaker 212 and solid-state power controllers 213, 214 provides a layer of safety to the galley's electrical system. The components help to prevent electrical overloads, short circuits, and other potential hazards by automatically interrupting power flow when abnormal conditions are detected. The wiring and equipment protection module 204 also safeguards the galley's wiring and electrical equipment from damage caused by electrical faults or failures. By controlling this module, the controller 203 can monitor the integrity of the electrical system and respond promptly to protect sensitive components from harm.

The control unit 200 further comprises a wiring distribution module 205 as a fixed module configured to provide a connection of the aircraft monument 100 to an aircraft wiring system. Wiring distribution integrated in the control unit 200 allows for establishing feeder configuration 218 and arranges the route segregation 219 needs arriving from the aircraft architecture and allows for less efforts in customization. The housing 202 further allows the integration of further elements such as placards 215, covers 216 and displays 217 scalable according to a desired configuration of the aircraft galley 101 or control unit 200. There are two scalable modules, the power supply module 207 and the user interface module 221 provided in the control unit 200.

The power supply module 207 is configured as a central power supply for supplying power to the aircraft galley 101, the electrical galley inserts 110 and to other active units such as chillers. The controller 203 is configured to control the power supply module 207. The aircraft galley 101 is provided with a single power supply module 207 acting as a power supply for providing power to all electrical galley inserts 110 and appliances, thus substituting the equipment's individual power supplies by the centralized scalable power supply module 207. The power supply is controlled via the controller 203 thus eliminating the need to provide a power supply and related protection means to each and every electrical galley insert 110. This allows for customization of the aircraft monument 100 and aircraft galley 101 with reduced efforts and provides the option for scaling the monument and galley configuration to use cases and aircraft architectures and at the same time enables centralization and control of power distribution within the aircraft galley 101. The controller's 203 ability to control the power supply module 207 allows for dynamic allocation of power based on real-time demands. This ensures that power is allocated precisely where and when it is needed most, optimizing energy usage and reducing waste. Centralized control of the power supply module 207 enables better monitoring and management of electrical systems within the aircraft galley 101.

The control unit 200 further comprises a user interface module 221 for at least one of receiving a user-generated input signal and displaying system parameters, with the user interface module 221 being configured as a scalable module connectable to a plurality of elements of the aircraft galley 101 for direct user control of elements such as by non-limiting example input and output displays 222, worklight 225, master switch-off 226, chiller 227, fan 228 and heater 229.

The control unit 200 incorporates existing core functions such as wiring protection, electrical communication, facilities (lights, chillers, heaters etc.) control, power management and connectivity in accordance with ARINC 812 and ARINC 813 but enhances aircraft galley 101 operation possibility by implementing additional functions such as improved and centralized power control, connection to operation's support, predictive maintenance, connectivity (e.g. by enhancement with wireless connectivity), thermal management (by e.g. intercompartment heat recovery within the aircraft monument 100), local and distributed interaction (by e.g. displays provided on the aircraft galley 101, the mobile crew devices and the flight attendant panel FAP), system dynamic management (by monitoring inter ATA water consumption and dynamic CAX monitoring and control). The invention further supports a modular design approach for e.g. enabling exchange of core functionalities without changing basic module set-up.

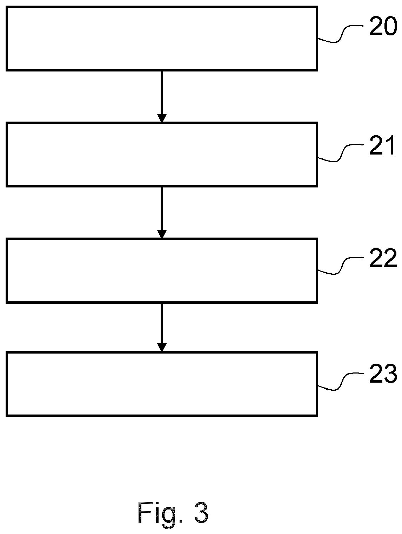

Fig. 3 schematically depict a flowchart of a method of operating an aircraft monument 100 configured as an aircraft galley 101 according to an embodiment of the invention.

The method comprises a step 20 of receiving a plurality of input signals indicative for the operational status of an aircraft 300, the aircraft galley 101 and the galley inserts 110 by the controller 203. In step 21 the plurality of input signals are analysed by the controller 203 an in step 22 a plurality of output signals is generated by the controller for controlling in step 23 the operating parameters of the aircraft galley 101 and the galley inserts 110 based on the plurality of output signals. With implementing the method for operating an aircraft galley 101, the aircraft galley 101 is highly responsive and adaptive to the dynamic conditions onboard the aircraft 300. By for example receiving input signals in step 20 and analysing the input signals indicative of the operational status of the aircraft 300 in step 21, the aircraft galley 101 and its galley inserts 110, the method allows for precise monitoring of resource utilization such as power, water, and food supplies. This enables the controller 203 to optimize resource allocation based on real-time requirements, minimizing waste and maximizing efficiency by generating a respective output signal in step 22 for controlling the operating parameters of the aircraft galley 101 and the galley inserts based on the plurality of output signals in step 23. The method also allows for analysing in step 21 a variety of input signals, including those related to the aircraft's operational status. This allows for the adaptation of galley operations in response to changing flight conditions such as turbulence, altitude, or temperature variations. By dynamically adjusting operating parameters via the output signals generated in step 22 and using these signals for controlling the operating parameters in step 23, the aircraft galley 101 can maintain optimal performance and passenger satisfaction throughout the flight.

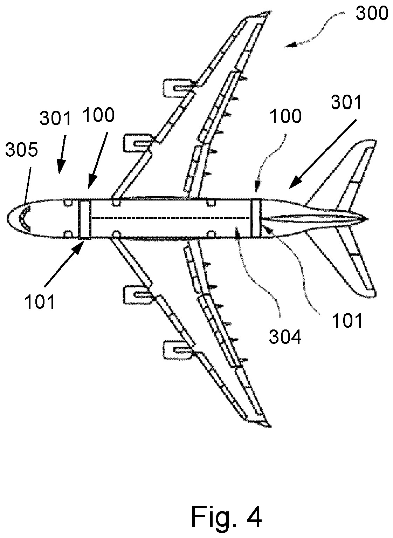

Fig. 4 schematically depicts an aircraft 300 according to an embodiment of the invention. The aircraft 300 is provided with two aircraft monuments 100 configured as aircraft galleys 101 that are in communicative connection with each other. The aircraft galleys 101 are installed in the front 301 and in the rear 302 of the aircraft 300, with easy access for flight attendants to serve passengers in both the cabin 304 and cockpit 305. By communicatively connecting the aircraft galleys 101, they can coordinate their operations, leading to improved efficiency. The connected aircraft galleys 101 also share information about inventory levels, resource usage, and operational status as well as diagnostic data and maintenance alerts.

In the foregoing detailed description, various features are grouped together in one or more examples or examples with the purpose of streamlining the disclosure. It is to be understood that the above description is intended to be illustrative, and not restrictive. It is intended to cover all alternatives, modifications, and equivalents. Many other examples will be apparent to one skilled in the art upon reviewing the above specification. The embodiments were chosen and described to best explain the principles of the invention and its practical applications, to thereby enable others skilled in the art to best utilize the invention and various embodiments with various modifications as are suited to the particular use contemplated.

### List of reference signs

- 100: aircraft monument
- 101: aircraft galley
- 104: oven
- 105: coffeemaker
- 106: refrigerator
- 108: lighting
- 110: galley inserts
- 112a, b, c: user interface device
- 113a, b: touchscreen
- 200: control unit
- 202: housing
- 203: controller
- 204: wiring and equipment protection module
- 205: wiring distribution module
- 206: I/O interface
- 207: power supply module
- 208: thermal management module
- 209: power management module
- 210: systems dynamic management module
- 211: operation support
- 212: thermal circuit breaker
- 213: local SSPC (Solid State Power Controller)
- 214: remote SSPC (Solid State Power Controller)
- 215: placard
- 216: cover
- 217: display
- 218: feeder configuration
- 219: route segregation
- 220: communication module
- 221: user interface module
- 222: input and output display
- 223: ethernet module
- 224: wireless communication module
- 225: worklight
- 226: master switch-off
- 227: chiller
- 228: fan
- 229: heater
- 300: aircraft
- 301: front
- 302: rear
- 304: cabin
- 305: cockpit
- 306: aircraft structure
- 20: step
- 21: step
- 22: step
- 23: step

## Claims

1. Aircraft monument (100) configured as an aircraft galley (101) having a plurality of compartments for arrangement of at least one galley insert (110), with the aircraft monument (100) being equipped with a control unit (200) comprising a controller (203), configured to receive a plurality of input signals indicative for the operational status of the an aircraft (300), the aircraft galley (101) and the at least one galley insert (110), to analyse the plurality of input signals and to generate a plurality of output signals for controlling operating parameters of the aircraft galley (101) and the at least one galley insert (110).

2. Aircraft monument (100) according to claim 1, wherein the at least one galley insert (110) is configured as one of an electrical galley insert, an active galley inserts and an interchangeable galley insert.

3. Aircraft monument (100) according to claim 1 or 2, wherein the control unit (200) further comprises a central power supply module (207) for supplying and/or distributing power to the aircraft galley (101) and the at least one galley insert (110) or an and wherein the controller (209) is configured to control the power supply module (207).

4. Aircraft monument (100) according to any one of claims 1 to 3, wherein the control unit (200) further comprises a wiring and equipment protection module (204) equipped with at least one of a thermal circuit breaker (212), a local solid state power controller (213) and a remoted solid state power controller (214), and wherein the controller (203) is configured to control the wiring and equipment protection module (204).

5. Aircraft monument (100) according to any one of claims 1 to 4, wherein the control unit (200) further comprises a wiring distribution module (205) configured to provide a connection of the aircraft monument (100) to an aircraft wiring system.

6. Aircraft monument (100) according to any of claims 1 to 5, wherein a plurality of detection means for one of identifying the at least one galley insert (110) and detecting the operational status of the at least one galley insert (110) is provided, with the detection means being configured as one of a sensor, in particular a temperature sensor, and a camera each generating an input signal to be received by the controller (203).

7. Aircraft monument (100) according to any one of claims 1 to 6, wherein the controller (203) is configured to receive and analyse input signals from at least one further input source, wherein the at least one further input source is one of a thermal management module (208), a system dynamic management (210), being in particular at least one of a dynamic CAX, in particular exhaustion, monitoring and control, an inter-ATA water consumption and control and an automated maintenance, and an operations support, being in particular at least one of a galley and trolley commissioning set-up support and an inventory management.

8. Aircraft monument (100) according to any one of claims 1 to 7, wherein the control unit (200) further comprises a user interface module (221) for at least one of receiving a user-generated input signal and displaying system parameters, with the user interface module (221) being configured as at least one of a user interface device (112a, b. c) fixedly installed in the aircraft monument (100), a mobile aircraft crew device and a flight attendant panel.

9. Aircraft monument (100) according to any one of claims 1 to 8, wherein a housing (202) is provided with at least the controller (203), the power supply module (207), the wiring and equipment protection module (204), the wiring distribution module (205) and the user interface module (221) being arranged in the housing (202).

10. Aircraft monument (100) according to any one of claims 1 to 9, wherein the controller (203) comprises a communication module (220) for communicating with at least one of the elements of the control unit (200) and the aircraft (300), the communication module (220) being configured to operate in a plurality of communication protocols, in particular a CANBus, ethernet or wireless protocol.

11. Method of operating an aircraft monument (100) according to any one of claims 1 to 10 configured as an aircraft galley (101) provided with a control unit (200), comprising the steps of:
- receiving a plurality of input signals indicative for the operational status of at least one of the aircraft (300), the aircraft galley (101) and the at least one galley insert (110), by the controller (203) provided in the control unit (200),
- analysing the plurality of input signals by the controller (203),
- generating a plurality of output signals by the controller (203), and
- controlling the operating parameters of the aircraft galley (101) and the at least one galley insert (110) based on the plurality of output signals.

12. Method according to claim 11, wherein the step of controlling the operating parameters of the aircraft galley (101) and the at least one galley insert (110) further comprises adapting the operating parameters of the aircraft galley (101) and the at least one galley insert (110) depending on flight phase or passenger service phase.

13. Method according to claim 11 and 12, wherein the central power supply module (207) is controlled by the controller (203) and supplies and distributes power individually to the aircraft galley (101) and the at least one galley insert (110) based on an output signal received from the controller (203).

14. Aircraft (300) comprising an aircraft monument (100) configured as an aircraft galley (101) according to any one of claims 1 to 10.

15. Aircraft (300) according to claim 14, wherein two or more aircraft monuments (100) are provided, with the aircraft monuments (100) being in communicative connection with each other.
